# EUROPEAN PATENT APPLICATION

(11) **EP 4 534 763 A1**
(43) Date of publication of application: **09.04.2025**
(21) Application number: 23201131.2
(22) Date of filing: 02.10.2023
(51) Int. Cl.: E02F 9/16, B60J 5/04, E05C 17/46

(54) **WORK MACHINE**

(71) Applicant: Yanmar Holdings Co., Ltd., Osaka-shi, Osaka (JP)
(72) Inventor: GAMBIER, Antoine, Saint-Dizier (FR); GORET, Pierre, Saint-Dizier (FR); CONCAS, Mathieu, Saint-Dizier (FR)
(74) Representative: Dennemeyer & Associates S.A.

(57) **Abstract**

[Problem] To provide a work machine capable of preventing fluttering of a door in a fully open state and reducing a manufacturing cost of a cabin by enabling the cabin to be used in common for support bodies different in size.

[Solution] A hydraulic excavator as a work machine includes a cabin that covers a driver's seat and a support body that supports the cabin. The cabin has a center pillar that extends in an up-down direction and a door that is rotatably supported by the center pillar in such a manner to be opened forward. The support body has a lock device that holds the door when the door is in a fully open state.

## Description

### TECHNICAL FIELD

The present invention relates to a work machine.

### BACKGROUND ART

A construction machine including a lock device that holds a door of a cabin in a fully open state is known as the related art. For example, in Patent Document 1, a lock device is provided on a cabin side to hold a door in a fully open state and prevent the door from fluttering.

### PRIOR ART DOCUMENT

### PATENT DOCUMENT

Patent Document 1: EP 1001094 B1

### SUMMARY OF INVENTION

### TECHNICAL PROBLEM

When a dedicated cabin is manufactured for each type of work machine with respect to a plurality of types of work machines in which a size (for example, a width in a left-right direction) of a support body supporting the cabin is different, it is necessary to manufacture a cabin for each of the support bodies different in size, which increases a cabin manufacturing cost. For this reason, it is desired to reduce the manufacturing cost by enabling the cabin used in common for the support bodies different in size.

However, when the lock device is provided on the cabin side, for example, in a case where the support body is configured to protrude sideward than the cabin, when the door is opened, the door hits the support body, and the door cannot be held by the lock device on the cabin side. Therefore, it is difficult to use the cabin in common.

Furthermore, in Patent Document 1, a chamfered portion is provided on an engine cover (corresponding to a part of the support body) to prevent contact with the engine cover when the door is opened. However, in this configuration, in a case where the cabin is used in common for the support bodies different in size, it is necessary to process and form the chamfered portion for each of the support bodies different in size, which is not realistic.

The present invention has been made to solve the above-described problems, and an object of the present invention is to provide a work machine capable of preventing fluttering of a door in a fully open state, and reducing the manufacturing cost of a cabin by enabling the cabin to be used in common for the support bodies different in size.

### SOLUTION TO PROBLEM

A work machine according to an aspect of the present invention includes a cabin that covers a driver's seat, and a support body that supports the cabin, in which the cabin has a center pillar that extends in an up-down direction, and a door that is rotatably supported by the center pillar in such a manner to be opened forward, and the support body has a lock device that holds the door when the door is in a fully open state.

### ADVANTAGEOUS EFFECTS OF INVENTION

According to the above configuration, it is possible to prevent fluttering of the door in a fully open state, and it is possible to reduce the manufacturing cost of the cabin by enabling the cabin to be used in common for the support bodies different in size.

### BRIEF DESCRIPTION OF DRAWINGS

FIG. 1 is a left side view illustrating a schematic configuration of a hydraulic excavator that is an example of a work machine according to an embodiment of the present invention.
FIG. 2 is a left front perspective view illustrating a method of arranging a hood provided on an upper swing body of the hydraulic excavator.
FIG. 3 is a left back perspective view illustrating a configuration of a cabin arranged on a support body of the upper swing body.
FIG. 4 is a left side view illustrating the configuration of the cabin.
FIG. 5 is a left side view illustrating a method of arranging the cabin with respect to the support body.
FIG. 6 is a left side view illustrating a configuration of a door of the cabin.
FIG. 7 is a left front perspective view illustrating the configuration of the door.
FIG. 8 is a left front perspective view illustrating an arrangement of a lock device that holds the door.
FIG. 9 is a plan view of the upper swing body when the door is in a fully open state.
FIG. 10 is an enlarged plan view illustrating a vicinity of the door in FIG. 9.
FIG. 11 is an enlarged left front perspective view illustrating a vicinity of the hood when the door in a fully open state.
FIG. 12 is a left side view of an upper swing body of a hydraulic excavator having the support body of a different size.
FIG. 13 is a plan view of the upper swing body of FIG. 12 when the door is in a fully open state.
FIG. 14 is an enlarged plan view illustrating a vicinity of the door in FIG. 13.
FIG. 15 is a left side view illustrating another configuration of the cabin.

### DESCRIPTION OF EMBODIMENTS

An embodiment of the present invention will be described below with reference to the drawings.

### [1. Work Machine]

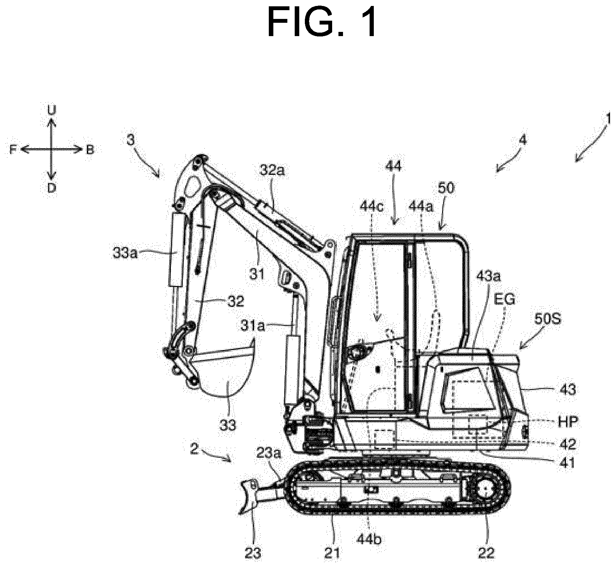

FIG. 1 is a left side view illustrating a schematic configuration of a hydraulic excavator 1 that is an example of a work machine according to an embodiment of the present invention. The hydraulic excavator 1 includes a lower traveling body 2, a work implement 3, and an upper swing body 4 (also referred to as a machine body). In the present embodiment, a configuration of the upper swing body 4 (in particular, a cabin 50 and a support body 50S described below) will be described based on two hydraulic excavators 1 having support bodies 50S different in size. Hereinafter, one hydraulic excavator 1 will be described.

Here, directions are defined as follows. A direction in which an operator (a manipulator, a driver) seated on a driver's seat 44a arranged in a steering part 44 of an upper swing body 4 faces the front is referred to as "front", and a direction opposite thereto is referred to as "back". A front-back direction of the upper swing body 4 coincides with the front-back direction of the lower traveling body 2 in a state where the upper swing body 4 is in a non-swing state (swing angle of 0 degrees) with respect to the lower traveling body 2. In the drawings, the hydraulic excavator 1 is illustrated when the upper swing body 4 in a non-swing state with respect to the lower traveling body 2. A left side and a right side as viewed from the operator seated on the driver's seat 44a are defined as "left" and "right" respectively. Further, a gravity direction perpendicular to the front-back direction and a left-right direction is defined as an up-down direction, with an upstream side of the gravity direction defined as "up" and a downstream side defined as "down". In the drawings, when necessary, forward is denoted by a symbol "F", backward by "B", rightward by "R", leftward by "L", upward by "U", and downward by "D".

The lower traveling body 2 includes a pair of left and right crawlers 21, a pair of left and right traveling motors 22, and a blade 23. The left and right traveling motors 22 drive the left and right crawlers 21 respectively, thereby enabling the hydraulic excavator 1 to move forward and backward. Each of the traveling motors 22 is composed of a hydraulic motor. A blade 23 for ground leveling work or the like is provided on a front side of a lower traveling body 2. The blade 23 is rotated by a blade cylinder 23a. The blade cylinder 23a is composed of a hydraulic cylinder.

The work implement 3 includes a boom 31, an arm 32, and a bucket 33. The boom 31, the arm 32, and the bucket 33 are independently driven, thereby to make it possible to perform excavation work of earth, sand, etc.

The boom 31 is rotated by a boom cylinder 31a. The boom cylinder 31a has a base end portion thereof supported by a front part of the upper swing body 4, and is movable freely in an extendable and retractable manner. The arm 32 is rotated by an arm cylinder 32a. The arm cylinder 32a has a base end portion thereof supported by the boom 31, and is movable freely in an extendable and retractable manner. The bucket 33 is rotated by a bucket cylinder 33a. The bucket cylinder 33a has a base end portion thereof supported by the arm 32, and is movable freely in an extendable and retractable manner. The boom cylinder 31a, the arm cylinder 32a, and the bucket cylinder 33a are respectively composed of a hydraulic cylinder.

The upper swing body 4 is located above the lower traveling body 2, and is provided to be swingable with respect to the lower traveling body 2 via a swing bearing (not illustrated). The upper swing body 4 includes a swing frame 41, a swing motor 42, an engine room 43, and a steering part 44. The upper swing body 4 swings via the swing bearing by the drive of the swing motor 42 arranged on the swing frame 41. The swing frame 41 is configured to include a plurality of metal members joined together by welding or the like. The swing motor 42 is composed of a hydraulic motor.

An engine EG and a hydraulic pump HP are accommodated in the engine room 43. The engine EG is a drive source of the hydraulic excavator 1. The engine EG is composed of a diesel engine, but is not limited thereto. For example, the engine EG may be composed of a gasoline engine.

The hydraulic pump HP is connected to a rotary shaft (output shaft) of the engine EG. The hydraulic pump HP is driven by the engine EG. The hydraulic pump HP is configured to include a variable displacement pump and a fixed displacement pump. The hydraulic pump HP supplies hydraulic oil (pressure oil) to hydraulic motors (e.g., the left and right traveling motors 22 and the swing motor 42) and hydraulic cylinders (e.g., the blade cylinder 23a, the boom cylinder 31a, the arm cylinder 32a, and the bucket cylinder 33a). The hydraulic motor and the hydraulic cylinder driven by the hydraulic oil are collectively referred to as hydraulic actuators (not illustrated).

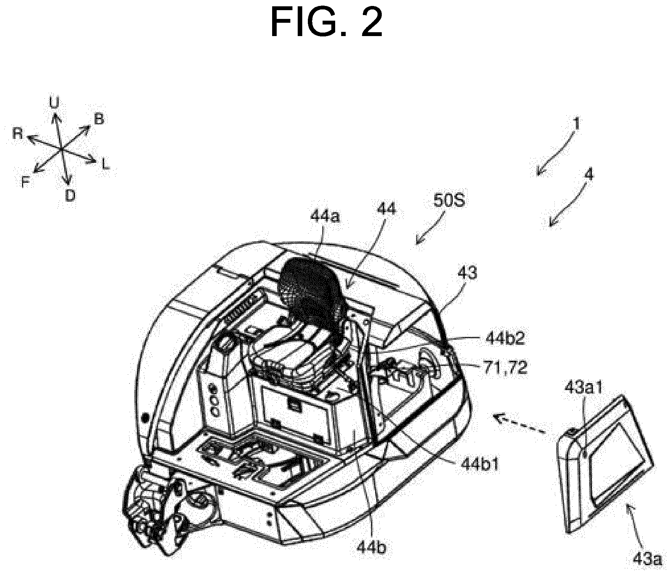

A hood 43a is arranged on a left side of the engine room 43. The hood 43a constitutes a left side wall of the engine room 43. A method of arranging the hood 43a will be described with reference to FIG. 2. FIG. 2 is a left front perspective view illustrating a method of arranging the hood 43a. In FIG. 2, illustrations of the engine EG and the like accommodated inside the engine room 43 are omitted for convenience. The hood 43a is composed of a resin member extending in the up-down direction and the front-back direction. A hole portion 43a1 formed in the hood 43a will be described below. The hood 43a is moved from the left to the right of the engine room 43 (the upper swing body 4). Then, the hood 43a can be arranged to cover the left side of the engine room 43. Thus, the hood 43a covers members (for example, the engine EG, a lock device 71 described below, an attachment member 72 described below, and the like) arranged inside the engine room 43.

As illustrated in FIG. 1, the steering part 44 is provided on an upper portion of the upper swing body 4. The steering part 44 includes a driver's seat 44a, a seat mount 44b, a plurality of steering members 44c, and the cabin 50.

The driver's seat 44a is located on a first support surface 44b1 (see FIG. 2) of the seat mount 44b and is fixed to the first support surface 44b1. That is, the seat mount 44b supports the driver's seat 44a. The seat mount 44b is arranged above the swing frame 41. The seat mount 44b is configured to include a plurality of metal members joined by welding or the like. The plurality of steering members 44c is arranged around the driver's seat 44a. The plurality of steering members 44c is configured to include a lever, a switch, a pedal, and the like. When an operator sits on the driver's seat 44a and operates the plurality of steering members 44c, the hydraulic actuator is driven. This enables the lower traveling body 2 to travel, the blade 23 to perform ground leveling work, the work implement 3 to perform excavation work, and the upper swing body 4 to swivel, etc. Hereinafter, a configuration of the cabin 50 will be described.

### [2. Configuration of Cabin]

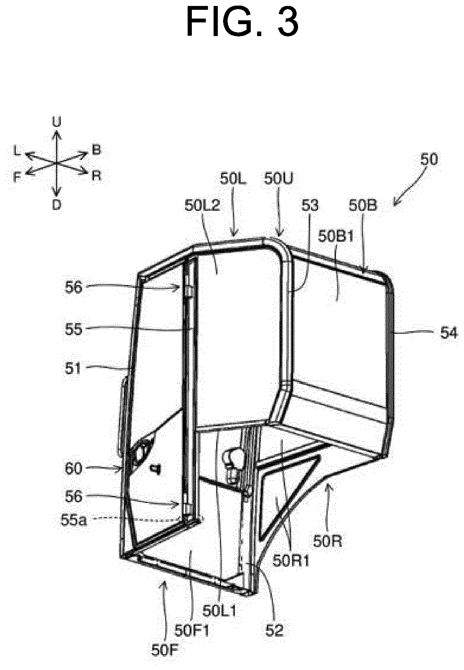

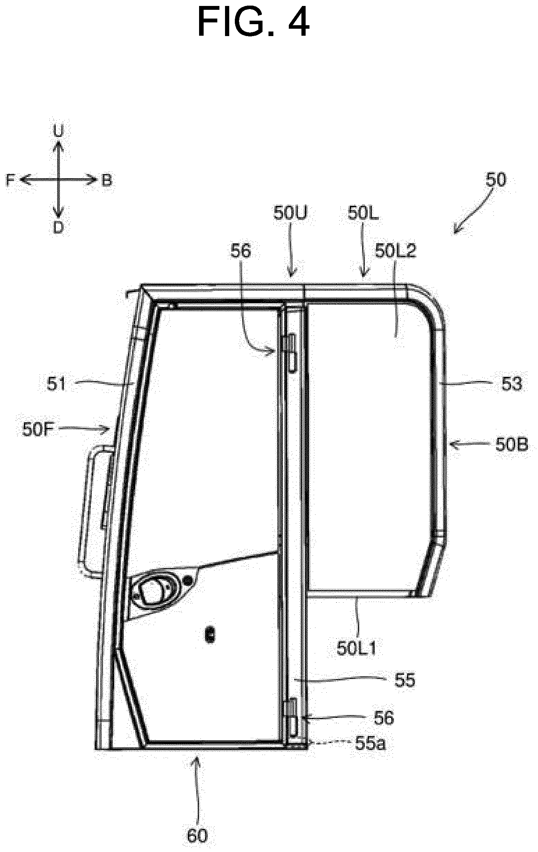

FIGS. 3 and 4 are a left back perspective view and a left side view, respectively, illustrating the configuration of the cabin 50. FIGS. 3 and 4 illustrate the cabin 50 when a door 60 is in a fully closed state. The cabin 50 has a front surface portion 50F, a back surface portion 50B, a left side surface portion 50L (the one side surface portion), a right side surface portion 50R (the other side surface portion), a top surface portion 50U, a left front pillar 51, a right front pillar 52, a left back pillar 53, a right back pillar 54, a center pillar 55, hinge portions 56, and the door 60. The cabin 50 is configured to have an open bottom portion.

The left front pillar 51, the right front pillar 52, the left back pillar 53, the right back pillar 54, and the center pillar 55 are composed of metal columnar members extending in the up-down direction. The left back pillar 53 and the right back pillar 54 are configured to be shorter in length in the up-down direction than the left front pillar 51, the right front pillar 52, and the center pillar 55.

The left front pillar 51 is arranged on a left front side of the cabin 50. The right front pillar 52 is arranged on a right front side of the cabin 50. The front surface portion 50F is located between the left front pillar 51 and the right front pillar 52. End portions of the front surface portion 50F in the left-right direction are coupled to the left front pillar 51 and the right front pillar 52, respectively. A front surface window 50F1 is provided in the front surface portion 50F.

The left back pillar 53 is arranged on a left back side of the cabin 50. The right back pillar 54 is arranged on a right back side of the cabin 50. The back surface portion 50B is located between the left back pillar 53 and the right back pillar 54. End portions of the back surface portion 50B in the left-right direction are coupled to the left back pillar 53 and the right back pillar 54, respectively. A back surface window 50B1 is provided in the back surface portion 50B.

The center pillar 55 is arranged between the left front pillar 51 and the left back pillar 53. More specifically, the center pillar 55 is arranged near the center in the front-back direction on the left side of the cabin 50.

The left side surface portion 50L extends obliquely toward the front left from the left back pillar 53, and is coupled to the center pillar 55. That is, the left side surface portion 50L is located backward of the center pillar 55. The left side surface portion 50L is configured such that a lower end edge 50L1 extends horizontally (see FIG. 4 in particular). The above-mentioned horizontality is not limited to perfect horizontality, but includes a case where the lower end edge 50L1 is inclined at a minute angle (for example, within a range of ± 10 ° with respect to the horizontality) in the up-down direction with respect to the horizontality. A front end portion of the left side surface portion 50L is coupled to the center pillar 55 at a position away upward from a lower end portion 55a of the center pillar 55. Therefore, the lower end edge 50L1 also intersects with the center pillar 55. The left side surface portion 50L is provided with a left side surface window 50L2 (one side surface window).

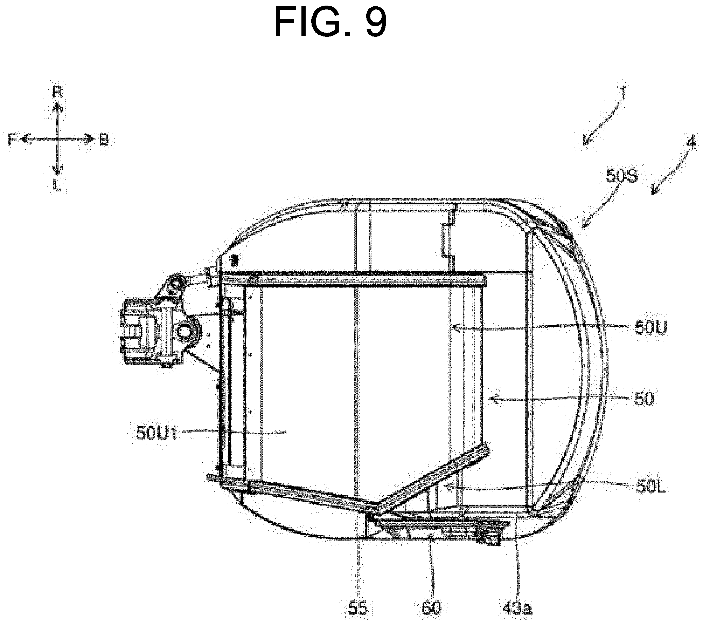

The door 60 is arranged between the center pillar 55 and the left front pillar 51. That is, the door 60 is located in front of the center pillar 55 in a fully closed state. The door 60 is fixed to the center pillar 55 via the hinge portions 56. Each of the hinge portions 56 is a coupling mechanism that rotatably couples the door 60 to the center pillar 55. The hinge portions 56 allow the door 60 to rotate in a forward-opened manner with respect to the center pillar 55 with the up-down direction as a rotation axis. In other words, the door 60 is rotatably supported by the center pillar 55 in such a manner to be opened forward. Therefore, when the door 60 is opened (the door 60 is rotated), the door 60 can be moved backward of the center pillar 55 (see FIG. 9). The configuration of the door 60 will be described below.

The right side surface portion 50R is located between the right front pillar 52 and the right back pillar 54. End portions of the right side surface portion 50R in the front-back direction are coupled to the right front pillar 52 and the right back pillar 54, respectively. The right side surface portion 50R is provided with a right side surface window 50R1 (the other side surface window).

The top surface portion 50U extending in a horizontal direction is arranged on an upper side of the cabin 50. The top surface portion 50U is coupled to respective upper end portions of the front surface portion 50F, the back surface portion 50B, the left side surface portion 50L, and the right side surface portion 50R. The top surface portion 50U is provided with a top surface window 50U1 (see FIG. 9).

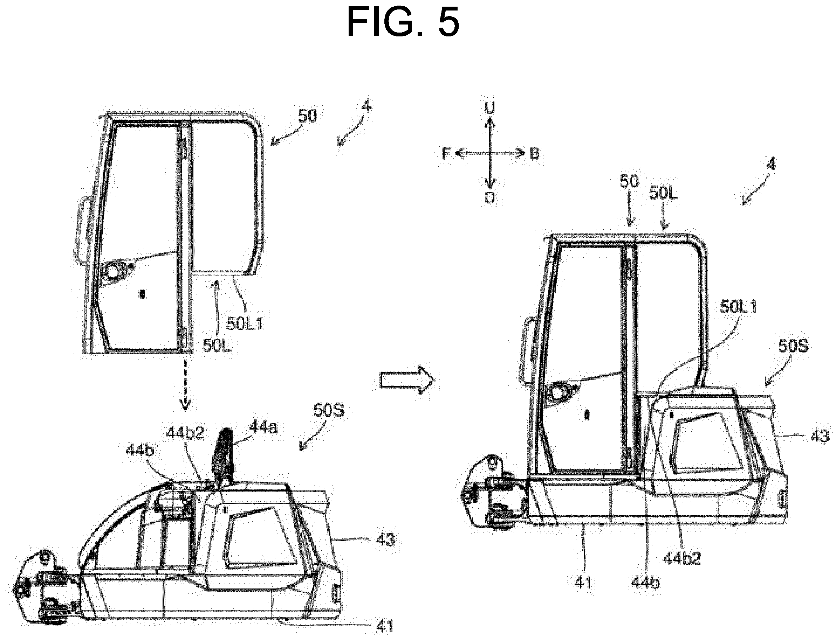

Here, a method of arranging the cabin 50 will be described with reference to FIG. 5. FIG. 5 is a left side view illustrating a method of arranging the cabin 50. In FIG. 5, illustrations of the plurality of steering members 44c and the like are omitted for convenience. The cabin 50 is arranged on the upper portion of the upper swing body 4 (see FIG. 1). That is, the upper swing body 4 includes the cabin 50 and the support body 50S on which the cabin 50 is arranged. More specifically, the support body 50S is configured to include the swing frame 41, the engine room 43, and the seat mount 44b.

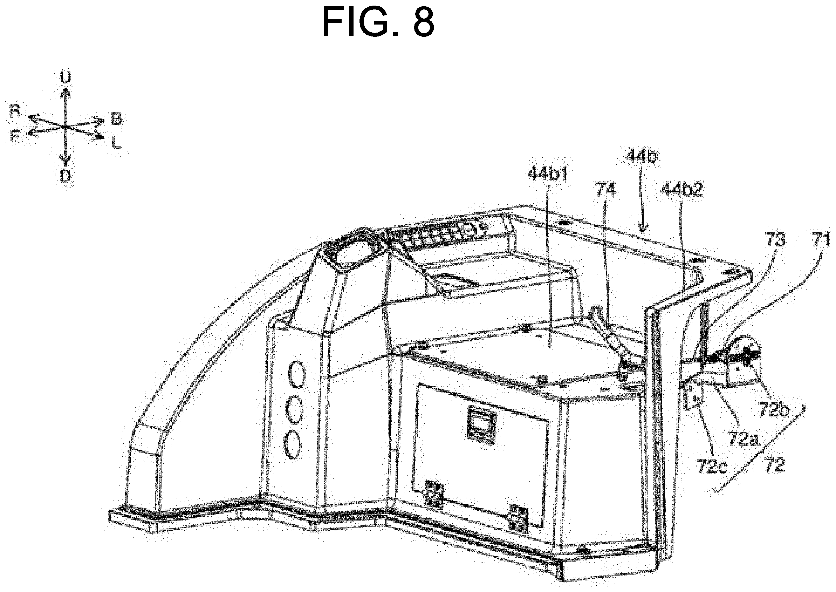

When the cabin 50 is arranged on the support body 50S, the cabin 50 is moved from an upper side to a lower side of the support body 50S. At this time, the cabin 50 is moved while the driver's seat 44a enters inside the cabin 50. Then, the lower end edge 50L1 of the left side surface portion 50L of the cabin 50 comes into contact with a second support surface 44b2 (see also FIGS. 2 and 8) of the seat mount 44b. Thus, the left back side of the cabin 50 is supported by the seat mount 44b. At this time, the left front side of the cabin 50 is supported by the swing frame 41. Therefore, the cabin 50 is supported by the support body 50S while the lower end edge 50L1 of the left side surface portion 50L is in contact with the support body 50S (the second support surface 44b2 of the seat mount 44b). By moving the cabin 50 as described above, the cabin 50 can be arranged on the support body 50S while covering the driver's seat 44a. As described above, the upper swing body 4 (hydraulic excavator 1) includes the cabin 50 that covers the driver's seat 44a and the support body 50S that supports the cabin 50.

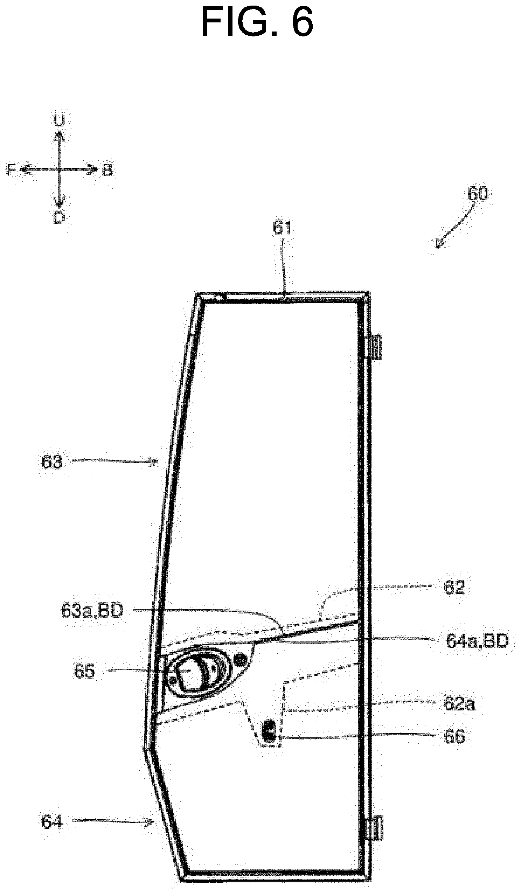

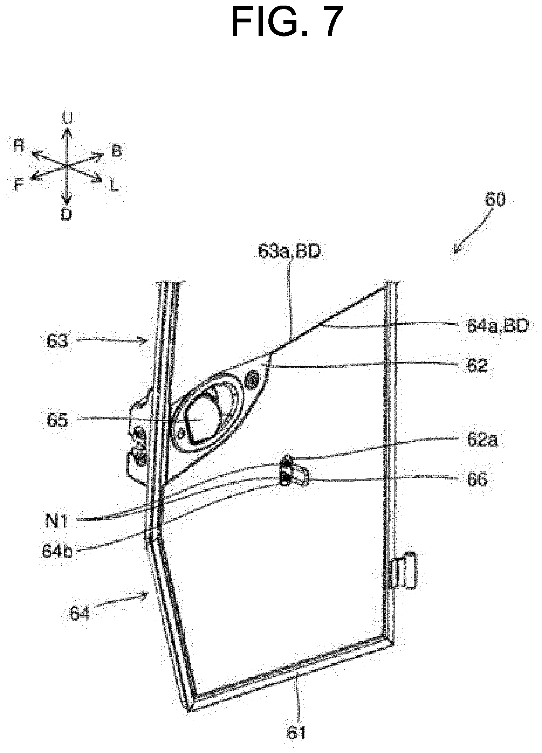

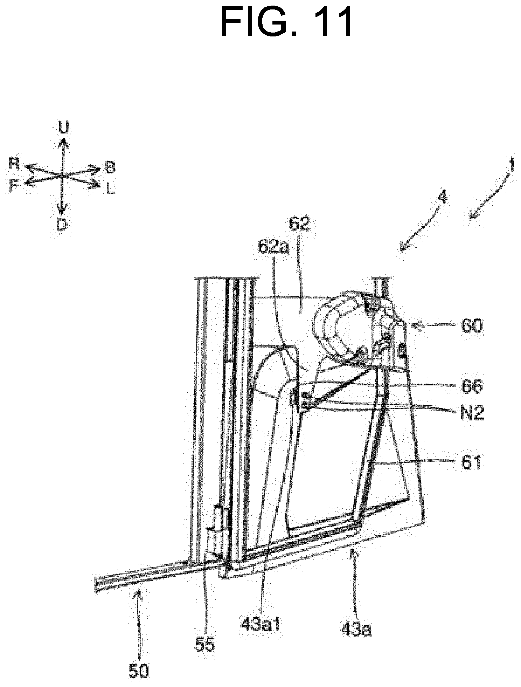

The configuration of the door 60 will be described with reference to FIGS. 6 and 7. FIGS. 6 and 7 are a left side view and a left front perspective view, respectively, illustrating the configuration of the door 60. The door 60 includes a door frame 61 and a beam member 62 (see also FIG. 11).

The door frame 61 is composed of a metal frame member arranged along an outer peripheral edge of the door 60. A beam member 62 is arranged on an inner side of the door frame 61. The beam member 62 is composed of a metal plate-like member. At a position slightly lower than an intermediate position in the up-down direction of the door 60, a front end portion of the beam member 62 is coupled to a front side of the door frame 61 and a back end portion of the beam member 62 is coupled to a back side of the door frame 61. The beam member 62 is provided so as to be inclined forward and downward.

The door 60 is provided with an upper window 63 and a lower window 64. The upper window 63 and the lower window 64 are arranged side by side in the up-down direction. A boundary BD between the upper window 63 and the lower window 64 includes a lower end 63a of the upper window 63 and an upper end 64a of the lower window 64. The lower end 63a and the upper end 64a are inclined downward toward the front while being along each other. A distance between the lower end 63a and the upper end 64a is of narrow width and substantially constant on the back side, but is wider on the front side than on the back side. On the beam member 62, a handle portion 65, which will be described below, is arranged at a position where the distance between the lower end 63a and the upper end 64a is widened.

The boundary BD (the lower end 63a and the upper end 64a) is located so as to overlap the beam member 62 in the side view. That is, the beam member 62 is arranged across the boundary BD in the up-down direction. The lower side of the upper window 63 including the lower end 63a is fixed to the beam member 62. The upper side of the lower window 64 including the upper end 64a is fixed to the beam member 62. That is, the beam member 62 supports the upper window 63 and the lower window 64. Part of outer peripheral portions of the upper window 63 and the lower window 64 are also supported by the door frame 61.

On a front side of the beam member 62, the handle portion 65 that is operated when the operator opens the door 60 is arranged. A protrusion 62a that protrudes downward is formed near the center in the front-back direction of the beam member 62 (see also FIG. 11). A holding member 66 is arranged at a lower portion of the protrusion 62a. Since the protrusion 62a protrudes downward from the beam member 62, the holding member 66 is located below the handle portion 65.

As illustrated in FIG. 7, the holding member 66 is formed by bending an upper end and a lower end of a metal rod-shaped member extending in the up-down direction to the right. The bent upper end and lower end of the holding member 66 are inserted into through holes (not illustrated) provided in the protrusion 62a, and are fixed by a nut N1 and a nut N2 (see FIG. 11). At this time, the holding member 66 is located to pass through an opening portion 64b provided in the lower window 64.

The holding member 66 is held by the lock device 71 (see FIG. 2) when the door 60 is in a fully open state. That is, the lock device 71 is a holding device that holds the holding member 66. The door 60 in a fully open state can be held by the holding member 66 and the lock device 71. Here, the arrangement of the lock device 71 will be described with reference to FIG. 8. FIG. 8 is a left front perspective view illustrating the arrangement of the lock device 71.

The lock device 71 is supported by the attachment member 72. More specifically, the attachment member 72 has a flat plate 72a, a left vertical plate 72b, and a right vertical plate 72c. The flat plate 72a is composed of a metal plate-like member extending in the left-right direction. The left vertical plate 72b is composed of a metal plate-like member extending in the up-down direction. A lower end portion of the left vertical plate 72b is coupled to a left end portion of the flat plate 72a. The lock device 71 is arranged on a right side of the left vertical plate 72b and is fixed by bolts (not illustrated).

The right vertical plate 72c is composed of a metal plate-like member extending in the up-down direction. An upper end portion of the right vertical plate 72c is coupled to a right end portion of the flat plate 72a. The right vertical plate 72c is fixed to a left back side of the seat mount 44b. Note that the right vertical plate 72c may be fixed to the seat mount 44b via another member such as a stay as necessary. As described above, the lock device 71 is attached to the seat mount 44b via the attachment member 72. Therefore, the lock device 71 is installed more firmly than in a case where the lock device 71 is attached to the hood 43a. Thus, even when a strong force is applied to the lock device 71 via the door 60 when the door 60 is held (being held), the lock device 71 can be prevented from being displaced. Further, according to the above arrangement, the lock device 71 is located inside the engine room 43. That is, the lock device 71 is included in the support body 50S.

The lock device 71 is provided with a release mechanism for releasing the holding of the holding member 66. A release lever 74 is coupled to the lock device 71 via a coupling member 73. The coupling member 73 is arranged so as to pass through an opening portion (not illustrated) formed in the seat mount 44b. The release lever 74 is rotatably provided with respect to the seat mount 44b via a bracket (not illustrated) or the like. The release lever 74 may be provided on the cabin 50 (for example, the center pillar 55). When the operator operates (rotates) the release lever 74, the above-described release mechanism is actuated. As a result, the holding member 66 held by the lock device 71 is opened, and the door 60 becomes rotatable in the closing direction.

### [3. Holding Door in a Fully Open State]

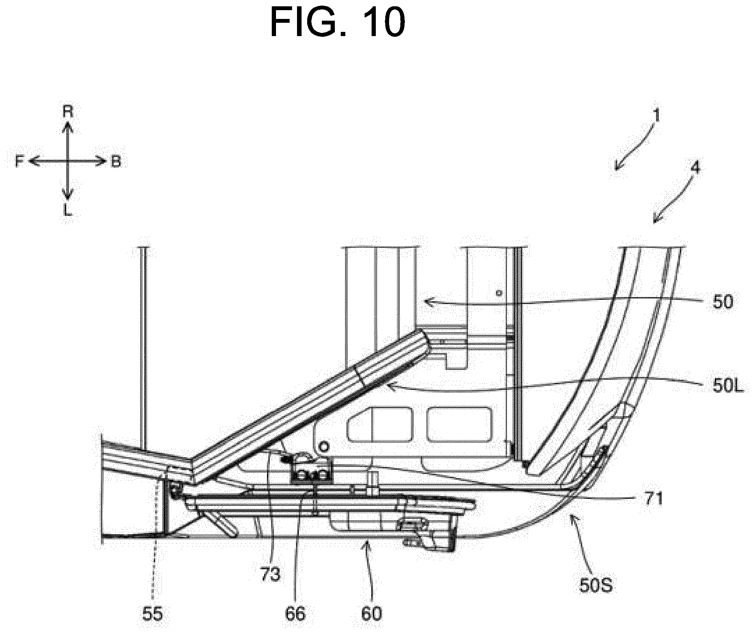

FIG. 9 is a plan view of the upper swing body 4 when the door 60 in a fully open state. FIG. 10 is an enlarged plan view illustrating a vicinity of the door 60 in FIG. 9. FIG. 11 is an enlarged left front perspective view illustrating a vicinity of the hood 43a. In FIG. 10, illustrations of a hood 43a and the like are omitted for convenience. In FIG. 11, the hood 43a is illustrated through the door 60 (particularly the lower window 64).

When the door 60 is opened from a fully closed state, the door 60 approaches the lock device 71. As illustrated in FIG. 2, the lock device 71 is covered with the hood 43a from the left side. That is, the hood 43a is located on an outer side of the machine body with respect to the lock device 71. Therefore, when the door 60 is opened and brought close to the lock device 71, the holding member 66 of the door 60 is inserted into the lock device 71 (see FIG. 10 in particular) while passing through the hole portion 43a1 provided in the hood 43a (see FIG. 11 in particular). As a result, the lock device 71 is actuated, and the holding member 66 is held. That is, the door 60 in a fully open state is held by the holding member 66 and the lock device 71.

As illustrated in FIG. 9, when the door 60 in a fully open state is held, the door 60 is located backward of the center pillar 55 and leftward of the hood 43a. The hood 43a is located on the left back side of the cabin 50 (particularly, the left side surface portion 50L). That is, the hood 43a is arranged outside the cabin 50 in a plan view. Therefore, when the door 60 is in a fully open state, the door 60, the hood 43a, and the left side surface portion 50L are located side by side in this order from the left side in a plan view. Therefore, in a plan view, the door 60 is located on a side opposite to the left side surface portion 50L with respect to the hood 43a and is held.

### [4. Common use of cabin between support bodies different in size]

Next, another hydraulic excavator 1 will be described. The other hydraulic excavator 1 has the support body 50S that has a size different from that of the one hydraulic excavator 1. The support body 50S included in the one hydraulic excavator 1 is referred to as one support body 50S, and the support body 50S included in the other hydraulic excavator 1 is referred to as the other support body 50S.

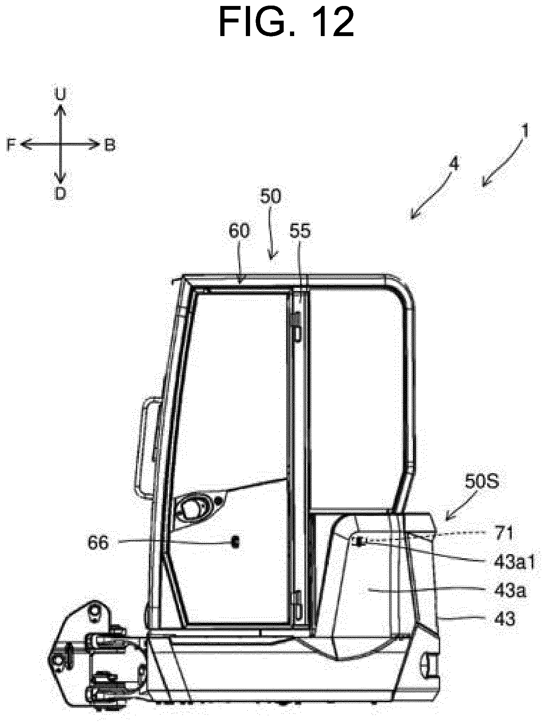

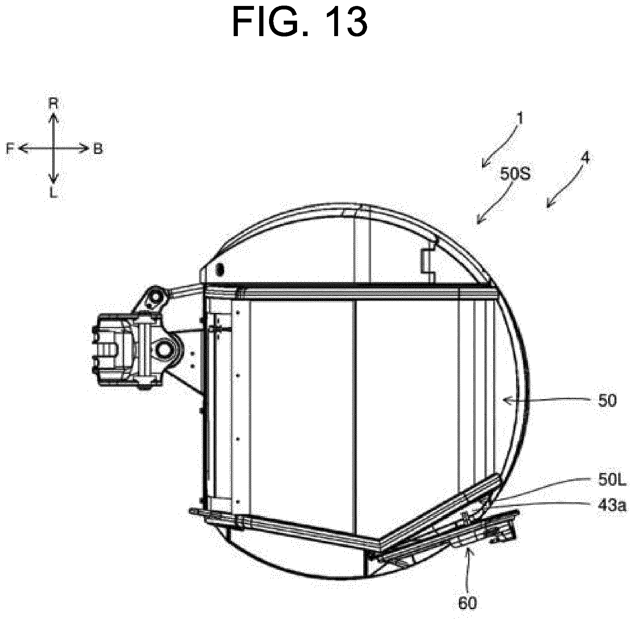

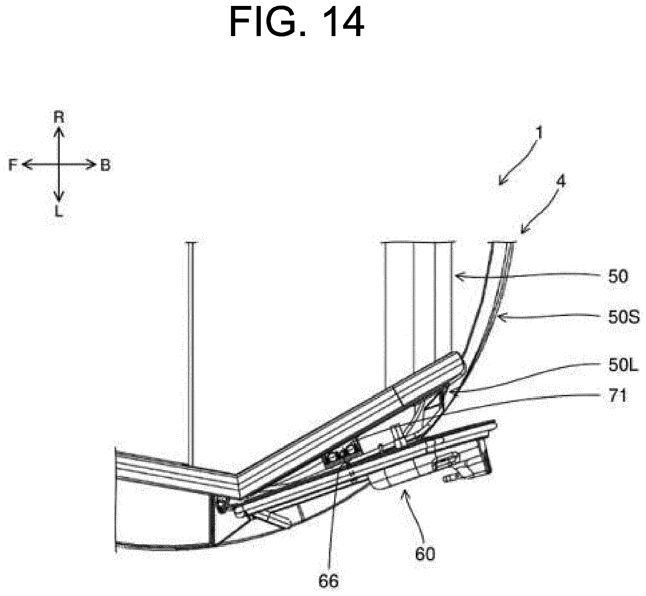

FIG. 12 is a left side view of the upper swing body 4 of another hydraulic excavator 1. FIG. 13 is a plan view of the upper swing body 4 when the door 60 in a fully open state. FIG. 14 is an enlarged plan view illustrating a vicinity of the door 60 in FIG. 13. In FIG. 14, illustrations of a hood 43a and the like are omitted for convenience.

As illustrated in FIGS. 12 and 13, the upper swing body 4 of the other hydraulic excavator 1 includes the cabin 50 and the support body 50S (the other support body 50S), similarly to the one hydraulic excavator 1. The cabin 50 has the same configuration as that of the cabin 50 illustrated in FIG. 3 and the like. That is, the other hydraulic excavator 1 includes the same cabin 50 as the one hydraulic excavator 1. The support body 50S includes the engine room 43 (including the hood 43a) and the lock device 71. The lower traveling body 2 and the work implement 3 (both not illustrated) of the other hydraulic excavator 1 have the same configurations as those of the one hydraulic excavator 1 (see FIG. 1).

When comparing the one support body 50S (see FIGS. 1 and 9) and the other support body 50S, the other support body 50S is configured to be smaller. More specifically, the other support body 50S is shorter in length (total length) in the front-back direction and shorter in width (particularly, width on the back side of the support body 50S) in the left-right direction. Therefore, the other hydraulic excavator 1 is configured to be smaller (smaller swing type) than the one hydraulic excavator 1.

As illustrated in FIGS. 13 and 14, even in the other hydraulic excavator 1, when the door 60 is opened from a fully closed state, the door 60 approaches the lock device 71. Then, the holding member 66 of the door 60 passes through the hole portion 43a1 (see FIG. 12) of the hood 43a and is inserted into the lock device 71 (see FIG. 14 in particular). Therefore, even in the other hydraulic excavator 1, the door 60 in a fully open state is held by the holding member 66 and the lock device 71.

The lock device 71 is arranged inside the support body 50S (see FIG. 12). Further, a part of the lock device 71 is arranged further to the left back side than the cabin 50 (particularly the left side surface portion 50L) in a plan view. That is, a part of the lock device 71 is located outside the cabin 50 in a plan view. As illustrated in FIG. 10, the entirety of the lock device 71 is located outside the cabin 50 in a plan view on the one support body 50S. Therefore, at least a part of the lock device 71 is arranged outside the cabin 50 in a plan view.

According to the above configuration, the cabin 50 covering the driver's seat 44a has the door 60. The door 60 is rotatably supported by the center pillar 55. Therefore, the operator can get on and off the driver's seat 44a by rotating the door 60 to an open state. In addition, since the door 60 is held by the lock device 71 in a fully open state, the door 60 can be prevented from fluttering in a fully open state. Therefore, the work by the hydraulic excavator 1 can be performed while the door 60 is fully opened.

Further, since the support body 50S for supporting the cabin 50 has the lock device 71, the same cabins 50 can be mounted on the hydraulic excavators 1 having the support bodies 50S different in size. That is, for example, when there are two hydraulic excavators 1 having the support bodies 50S different in size, the door 60 in a fully open state can be held by the lock devices 71 included in the respective support bodies 50S even in a case where the cabin 50 is supported by the one support body 50S or even in a case where the same cabin 50 is supported by the other support body 50S (see FIGS. 9 and 13). Therefore, the same cabin 50 can be used in common by the hydraulic excavators 1 having the support bodies 50S different in size. Therefore, the number of types of cabins 50 to be manufactured can be reduced as compared with a case where dedicated cabins 50 are manufactured and prepared for each of the hydraulic excavators 1 having the support bodies 50S different in size. As a result, the manufacturing cost of the cabin 50 can be reduced.

Even in a configuration in which the cabin 50 has a side surface portion (the left side surface portion 50L in the present embodiment) located backward of the center pillar 55, it is preferable that a space below the side surface portion inside the support body 50S be effectively used as an arrangement space for members such as the engine EG. Due to the effective use of the above-described space, for example, the total length of the support body 50S is shortened as compared with a configuration in which the above-described members are arranged backward of the cabin 50, and the size of the work machine can be reduced. Therefore, as illustrated in FIG. 4, in the configuration in which the cabin 50 includes the side surface portion located backward of the center pillar 55 as in the present embodiment, it is preferable that the side surface portion (for example, the left side surface portion 50L) is coupled to the center pillar 55 at a position away upward from the lower end portion 55a of the center pillar 55. In addition, as illustrated in FIG. 5, the support body 50S is preferably in contact with the lower end edge 50L1 of the side surface portion and supports the cabin 50.

From the viewpoint of stabilizing the support of the side surface portion by the support body 50S and stabilizing the support of the entire cabin 50, it is preferable that the lower end edge 50L1 of the side surface portion extends horizontally and intersects the center pillar 55 as illustrated in FIG. 4.

In order to arrange the handle portion 65 on the door 60 while securing a field of view passing through the door 60 in a fully closed state as viewed from the operator seated on the driver's seat 44a, it is preferable that the door 60 has the following configuration. That is, it is preferable that the door 60 has the upper window 63 and the lower window 64, and the handle portion 65 is provided on the beam member 62 located across the boundary BD between the upper window 63 and the lower window 64. Further, as illustrated in FIG. 12, it is preferably to arrange the holding member 66 at a position corresponding to the lock device 71 arranged in the support body 50S, and to arrange the handle portion 65 at a position where the operator can easily operate the handle portion 65 when opening the door 60. Therefore, as in the present embodiment, in the configuration in which the door 60 has the holding member 66 that is held by the lock device 71, it is preferable that the holding member 66 is arranged downward of the handle portion 65.

From the viewpoint of reliably realizing the configuration in which the holding member 66 is arranged downward of the handle portion 65, the following configuration is preferable. That is, it is preferable that the beam member 62 has a protrusion 62a that protrudes downward, and the holding member 66 is arranged at the protrusion 62a.

From the viewpoint of protecting the lock device 71 from contact with the outside or the like, it is preferable that the support body 50S has the hood 43a that covers the lock device 71 as in the present embodiment.

Even in a configuration in which the lock device 71 is covered by the hood 43a, it is preferable that the door 60 is reliably held by the holding member 66 and the lock device 71. From this viewpoint, as in the present embodiment, it is preferable that the hood 43a has the hole portion 43a1 through which the holding member 66 passes when the door 60 is in a fully open state.

When a space inside the support body 50S (in particular, the engine room 43 partially covered by the hood 43a) is increased, a degree of freedom of an arrangement layout of members (for example, the engine EG and the like) arranged in the space is improved. From this viewpoint, as in the present embodiment, it is preferable that the hood 43a is arranged outside the cabin 50 in a plan view.

Even in a configuration in which the hood 43a is arranged outside the cabin 50 in a plan view, it is preferable that the door 60 in a fully open state is reliably held by the lock device 71. From this viewpoint, as in the present embodiment, when the door 60 is in a fully open state, it is preferable that the door 60 is located on the side opposite to the side surface portion with respect to the hood 43a and is held by the lock device 71.

From the viewpoint of avoiding interference between the door 60 and the above-described side surface portion when the door 60 is held in a fully open state, it is preferable that least a part of the lock device 71 is arranged outside the cabin 50 in a plan view as in the present embodiment.

In order to attach the lock device 71 to the support bodies 50S different in size, for example, the following methods are conceivable. That is, a plurality of attachment members 72 is prepared in accordance with the sizes of the support bodies 50S. Then, an appropriate attachment member 72 is selected for each of the support bodies 50S different in size, and the lock device 71 is attached to the seat mount 44b of the support body 50S through the selected attachment member 72. Thus, the lock device 71 can be arranged at an appropriate position (a position at which the door 60 in a fully open state can be held) for each of the support bodies 50S different in size. From such a viewpoint, as in the present embodiment, it is preferable that the lock device 71 is attached to the seat mount 44b via the attachment member 72 in a configuration in which the support body 50S includes the seat mount 44b.

### [5. Anther Configuration of Cabin]

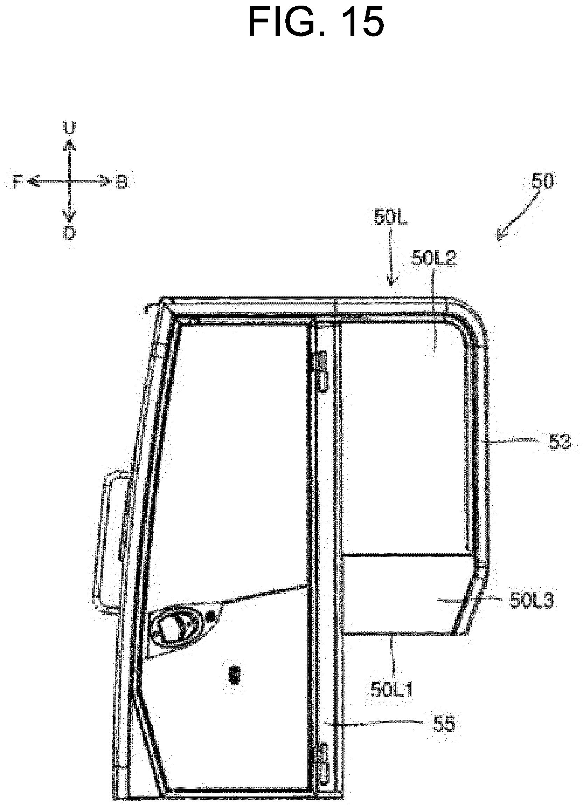

Another configuration of the cabin 50 will be described with reference to FIG. 15. FIG. 15 is a left side view illustrating another configuration of the cabin 50. FIG. 15 illustrates the cabin 50 when the door 60 is in a fully closed state. The cabin 50 illustrated in FIG. 15 has the same configuration as that of the cabin 50 illustrated in FIG. 1 and the like except that the left side surface portion 50L (the one side surface portion) has a side wall portion 50L3.

The side wall portion 50L3 is composed of a metal plate-like member. A left side surface window 50L2 is located above the side wall portion 50L3. The side wall portion 50L3 is located between the lower end edge 50L1 and the left side surface window 50L2. The gap between the lower end edge 50L1 and the left side surface window 50L2 is filled with the side wall portion 50L3. The lower end edge 50L1 and the left side surface window 50L2 are included in the left side surface portion 50L.

By providing a side surface window (the left side surface window 50L2 in the present embodiment) in the cabin 50 (particularly, the side surface portion), a field of view obliquely backward (obliquely leftward and backward in the present embodiment) as viewed from the operator seated on the driver's seat 44a is secured. Further, by providing the side wall portion 50L3 on the side surface portion, the strength of the side surface portion is improved. Therefore, the side surface portion of the cabin 50 may be configured to include the side surface window and the side wall portion 50L3.

### [6. Supplement]

In the present embodiment, the configuration in which the lock device 71 provided with the lock mechanism is provided on the support body 50S has been described, but the lock mechanism may be provided on the holding member 66 of the door 60. In this case, the lock device 71 of the support body 50S may be configured by a frame member which is hooked by the lock mechanism of the door 60. Even in the above-described configuration, the door 60 in a fully open state can be held by the relative hooking between the holding member 66 and the lock device 71. When the hooking between the holding member 66 and the lock device 71 is released, the door 60 can be rotated and closed from a fully open state.

Further, when the lock mechanism is provided on the door 60 (the holding member 66), the release lever 74 may be provided on the door 60. It is preferable that the release lever 74 is arranged at a position where an operator seated on the driver's seat 44a can easily operate the release lever 74.

In the present embodiment, a configuration in which one door 60 is provided on the left side of the cabin 50 has been described, but the present invention is not limited to the above-described configuration. For example, the door 60 may be provided on each of the left side and the right side of the cabin 50. At this time, the lock devices 71 are arranged on the left side and the right side of the support body 50S so as to correspond to the left and right doors 60. This configuration is suitable for a work machine (for example, a wheel loader) in which the cabin 50 is arranged near a center in the left-right direction of the support body 50S.

The hydraulic excavator 1 may be configured to drive the hydraulic pump HP by using an electric motor instead of the engine EG (for example, an electric excavator).

In the present embodiment, the hydraulic excavator 1 has been described as an example of the work machine. However, the work machine is not limited to the hydraulic excavator 1, and may be a construction machine such as a wheel loader or a mobile crane. Also, the work machine may be an agricultural machine such as a combine harvester, or a tractor.

### [7. Supplementary Notes]

The hydraulic excavator 1 described in the present embodiment can also be expressed as a work machine as illustrated in the following Supplementary Notes.

The work machine according to Supplementary Note (1) comprising:
a cabin that covers a driver's seat; and
a support body that supports the cabin,
wherein the cabin has:
   a center pillar that extends in an up-down direction; and
   a door that is rotatably supported by the center pillar in such a manner to be opened forward,
the support body has a lock device that holds the door when the door is in a fully open state.

The work machine of Supplementary Note (2) is the work machine according to Supplementary Note (1), wherein
the cabin further has a side surface portion that is located backward of the center pillar,
the side surface portion is coupled to the center pillar at a position away upward from a lower end portion of the center pillar, and
the support body is in contact with a lower end edge of the side surface portion and supports the cabin.

The work machine of Supplementary Note (3) is the work machine according to Supplementary Note (2), wherein
the lower end edge of the side surface portion extends horizontally and intersects with the center pillar.

The work machine of Supplementary Note (4) is the work machine according to Supplementary Note (2) or (3), wherein
the door has:
   an upper window and a lower window that are arranged side by side in the up-down direction;
   a beam member that is located across a boundary between the upper window and the lower window and supports the upper window and the lower window;
   a handle portion that is arranged on the beam member; and
   a holding member that is held by the lock device,
the holding member is arranged downward of the handle portion.

The work machine of Supplementary Note (5) is the work machine according to Supplementary Note (4), wherein
the beam member includes a protrusion that protrudes downward, and
the holding member is arranged at the protrusion.

The work machine of Supplementary Note (6) is the work machine according to Supplementary Note (4) or (5), wherein
the support body has a hood that covers the lock device.

The work machine of Supplementary Note (7) is the work machine according to Supplementary Note (6), wherein
the hood is arranged outside the cabin in a plan view.

The work machine of Supplementary Note (8) is the work machine according to Supplementary Note (7), wherein
when the door is in a fully open state, the door is, in a plan view, located on a side opposite to the side surface portion with respect to the hood and is held by the lock device.

The work machine of Supplementary Note (9) is the work machine according to any one of Supplementary Notes (6) to (8), wherein
the hood has a hole portion through which the holding member passes when the door is in a fully open state.

The work machine of Supplementary Note (10) is the work machine according to any one of Supplementary Notes (2) to (9), wherein
the side surface portion of the cabin has:
a side surface window; and
a side wall portion that is arranged between the side surface window and the lower end edge.

The work machine of Supplementary Note (11) is the work machine according to any one of Supplementary Notes (2) to (10), wherein
at least a part of the lock device is arranged outside the cabin in a plan view.

The work machine of Supplementary Note (12) is the work machine according to any one of Supplementary Notes (1) to (11), wherein
the support body includes a seat mount that supports the driver's seat, and
the lock device is attached to the seat mount via an attachment member.

Although the embodiments of the present invention have been described above, the scope of the present invention is, however, not limited thereto, and can be carried out within an extended or modified range without departing from the gist of the present invention.

### INDUSTRIAL APPLICABILITY

The present invention is applicable to work machines such as a construction machine and an agricultural machine, for example.

### REFERENCE SIGNS LIST

1 Hydraulic excavator (work machine)
43a Hood
43a1 Hole portion
44a Driver's seat
44b Seat mount
50 Cabin
50L Left side surface portion (side surface portion)
50L1 Lower end edge
50L2 Left side surface window (side surface window)
50L3 Side wall portion
50S Support body
55 Center pillar
55a Lower end portion
60 Door
62 Beam member
62a Protrusion
63 Upper window
64 Lower window
65 Handle portion
66 Holding member
71 Lock device
72 Attachment member
BD Boundary

## Claims

1. A work machine comprising:
a cabin that covers a driver's seat; and
a support body that supports the cabin,
wherein the cabin has:
a center pillar that extends in an up-down direction; and
a door that is rotatably supported by the center pillar in such a manner to be opened forward,
the support body has a lock device that holds the door when the door is in a fully open state.

2. The work machine according to claim 1, wherein
the cabin further has a side surface portion that is located backward of the center pillar,
the side surface portion is coupled to the center pillar at a position away upward from a lower end portion of the center pillar, and
the support body is in contact with a lower end edge of the side surface portion and supports the cabin.

3. The work machine according to claim 2, wherein
the lower end edge of the side surface portion extends horizontally and intersects with the center pillar.

4. The work machine according to claim 2 or 3, wherein
the door has:
an upper window and a lower window that are arranged side by side in the up-down direction;
a beam member that is located across a boundary between the upper window and the lower window and supports the upper window and the lower window;
a handle portion that is arranged on the beam member; and
a holding member that is held by the lock device,
the holding member is arranged downward of the handle portion.

5. The work machine according to claim 4, wherein
the beam member includes a protrusion that protrudes downward, and
the holding member is arranged at the protrusion.

6. The work machine of claim 4 or 5, wherein
the support body has a hood that covers the lock device.

7. The work machine according to claim 6, wherein
the hood is arranged outside the cabin in a plan view.

8. The work machine according to claim 7, wherein
when the door is in a fully open state, the door is, in a plan view, located on a side opposite to the side surface portion with respect to the hood and is held by the lock device.

9. The work machine according to any one of claims 6 to 8, wherein
the hood has a hole portion through which the holding member passes when the door is in a fully open state.

10. The work machine according to any one of claims 2 to 9, wherein
the side surface portion of the cabin has:
a side surface window; and
a side wall portion that is arranged between the side surface window and the lower end edge.

11. The work machine according to any one of claims 2 to 10, wherein
at least a part of the lock device is arranged outside the cabin in a plan view.

12. The work machine according to any one of claims 1 to 11, wherein
the support body includes a seat mount that supports the driver's seat, and
the lock device is attached to the seat mount via an attachment member.
